(19) **Europäisches Patentamt / European Patent Office / Office européen des brevets**

(11) **EP 1 427 117 B1**

(12) **EUROPEAN PATENT SPECIFICATION**

(45) Date of publication and mention
of the grant of the patent:
**23.05.2007 Bulletin 2007/21**

(51) Int Cl.:
**H04B 7/005** (2006.01)

(21) Application number: **02425743.8**

(22) Date of filing: **02.12.2002**

(54) **Reception and transmission power gains control in a point-to-multipoint system**

Empfangs- und Sendeleistungsverstärkungsregelung in einem Punkt-zu-Mehrpunkt System

Procédé de commande de l'amplification de puissance de réception et transmission dans un système point à multipoint

(84) Designated Contracting States:
**AT BE BG CH CY CZ DE DK EE ES FI FR GB GR IE IT LI LU MC NL PT SE SI SK TR**

(43) Date of publication of application:
**09.06.2004 Bulletin 2004/24**

(73) Proprietor: **Siemens S.p.A.**
**20126 Milano (IT)**

(72) Inventors:
• **Abbiati, Fausto**
**23877 Paderno d'Adda (LC) (IT)**

• **Gaspare, Licitra**
**20064 Gorgonzola (MI) (IT)**
• **Santacesaria, Claudio**
**20100 Milan (IT)**

(74) Representative: **Berg, Peter et al**
**Siemens AG**
**Corporate Intellectual Property and Functions**
**Postfach 22 16 34**
**80506 München (DE)**

(56) References cited:
**US-B1- 6 229 792     US-B1- 6 253 077**
**US-B1- 6 308 080**

**Description**

**FIELD OF THE INVENTION**

The present invention relates to point-to-multipoint radio networks, and more precisely to a method for optimally adjusting reception and transmission power gains inside a point-to-multipoint wireless system.

**BACKGROUND ART**

In point-to-multipoint wireless (radio) networks either fixed, as local loops and satellite systems, or mobile, as cellular telephony systems, masters and slave stations are defined for two-way communications. Transmissions from a master to one or more slaves are performed on a downstream physical channel shared among the slaves stations, also termed peripherals or subscribers. Transmissions from one or more slaves to the master are performed on an upstream physical channel shared among the slaves. Hereinafter in the description stream and link are synonyms. The downlink channel is the direct link, while the uplink channel is the reverse link. Known channel sharing techniques useful for wireless communication are the following: FDMA (Frequency Division Multiple Access), TDMA (Time Division Multiple Access), CDMA (Code Division Multiple Access), and SDMA (Space Division Multiple Access), while fibre optics can be accessed by WDMA (Wavelength Division Multiple Access). These techniques can be used individually or two or more together. In two-way communications the upstream is divided from the downstream by Frequency Division Duplexing (FDD), or by Time Division Duplexing (TDD). Examples of these duplexing schemes are explained in ETSI Technical Specification "ETSI TS 101 999 - Broadband Radio Access Networks (BRAN); HIPERACCESS; PHY protocol specification".

Point-to-multipoint radio networks provide service to a large number of subscribers at each node characterised by a master station, in its turn each subscriber can collect and distribute services to several local terminals. Due to large traffic and reuse of the resources, the problem of minimise cochannel and adjacent channel interferences shall be carefully considered in the network design. Closed loop Power control, both uplink and downlink, is a powerful tool able to guarantee a clean RF environment. In absence of downlink power control, the signal is transmitted downstream at a fixed power level from the master station to all the slave stations, independently of their distance from the master station. According to the actual distance, the slave station placed near the master station will receive (in the average) a higher radio signal with respect to another slave placed far away from the master. Since the system shall guarantee a quality service even to the farthest subscriber, it descends that with fixed transmission power the nearest subscriber is excessively favoured. Extending this conclusion to all the slaves, the result is a great deal of transmittal power wasted at the master side which increases the average interference of the system.

Moreover, in absence of an upstream closed loop power control all the slaves transmit at fixed power level uplink to the master station, independently of their distances from it. According to the actual distance, the master station will receive (in the average) a higher radio signal from the nearest slave station than to the farthest one. This doesn't meet the requirement clearly stated in the already cited specification ETSI TS 101 999, by which on the reverse link (uplink) the master station needs to receive from each slave at a fixed signal level (at "working" level, which is set few dB higher than the system threshold).

In addition to the free space path loss, each two-way radio transmission is subjected to unforeseeable multipath fading and rain fading, which are variable due their statistical nature and generally different from a transmission direction to the other. By the combined effect of foreseeable and unforeseeable losses, signals with large variable power levels are possible at the two ends of a radio path. For the estimate of the total path loss some other statistical parameters have to be considered in the worst case, i.e.: temperature, ageing, inaccuracies, etc.; at the end an 80 dB value is realistic. Closed loop power control, and in minor extent the open loop power control, must be able to face a so large dynamic. In the known art we can substantially distinguish three different ways to accommodate the large variations in the transmitted and received power level:

1. Using transmission and reception AGC (Automatic Gain Control) circuitry with large fast time-varying (also called "dynamic") regulation range. This offers an automatic adaptation to all the possible working conditions, but is quite expensive and complex.

2. Using transmission and reception AGC circuitry with small "dynamic" regulation range and large configurable but non time-varying range (also called "semistatic" range); these "semistatic" gain/attenuation values are usually set off-line by the operator after the working conditions have been recognised. The solution is cost effective but requires some actions performed by the operator during the installation phase.

3. Using transmission and reception AGC circuitry with small "dynamic" regulation range and adopting different antenna gain values and/or fixed attenuators at radiofrequency level for slave stations closer to master station. This requires an intervention during installation phase, different radiofrequency parts are necessary to adapt the slave station to different scenarios. Sub-optimal system performances, such as noise figure and signal distortion, are achieved.

The use of transmission and reception AGC circuitry in a fixed wireless communication system (point-to-multipoint) is largely disclosed in the following patens: US 6,253,077 B1 and US 6,308,080 B1 (filed in the same date) for a same embodiment. In all effect the main teaching of the two US patents is a power calibration of the master tower transmitter (US 6,253,077 B1) and the master tower receiver (US 6,308,080 B1) in view of closed loop power control either downlink or uplink. The calibration requires the accurate measure of the tower transmitter and receiver gains. Among the other things, the common text of the two patents includes the description of a reception AGC and a transmission AGC in each subscriber station. The reception AGC is coupled to a Receiver Unit and is used primarily to adjust for path loss differences between near and far slave stations (i.e.: 34 dB) and rain fade. A second receiver AGC loop may be included in a tuner/demodulator cascaded to the first AGC, in order to assure that the actual demodulator circuitry has a good signal level to demodulate. The transmission AGC receives a command to change the gain of the RF transmission power in accordance with messages transmitted by the master downlink for the execution of an emulated continuous mode uplink power control (controls and corrections are carried out more times every second). By effect of the transmission and reception AGCs each slave station is able to receive with a broad range of fast time-varying power values, and to adapt its transmission power according to the actual distance from the master station and the instantaneous propagation conditions. In order to reduce the dynamic range of the various AGCs, the common embodiment includes a Table 2 in which all the causes fixed and variable affecting the large variability of the subscriber transmission power are listed. The aim is that to remove all the fixed contributions at set up, leaving a reduced variability to be compensated. For example, a total power dynamic range of 79 dB is needed in the worst case and only 20 dB minimum if all fixed variation is removed during set up.

## OUTLINED TECHNICAL PROBLEM

Although the discussed patents US 6,253,077 B1 and US 6,308,080 B1 teach a very skilled Power control and the idea of removing the fixed attenuation during the set up phase in order not to overdrive the reception and transmission AGCs, nonetheless the system is still not optimal, in spite of the following reasons reported textually from the citations in order of exposition:

a) "The propagation delay calculation is necessary (at the master) to align time slots between subscriber stations that are transmitting on the same channel. Each subscriber station has a register that advances or retards its transmit time depending on distance (time delay)". R.N.: This is a well known task performed, i.e. by the GSM BTS to adaptively align the initial instant of the MS frames subjected to a variable delay in consequence of the mobility.

b) "The CPE (Customer Premise Equipment) distance from the node radio port (master) is not automatically known and must be estimated by software". R.N.: The estimate could be obtained by the execution of the previous point a).

c) "The low cost approach to power control will place requirements on subscriber equipment and installers to remove a large portion of the fixed dynamic range at installation". R.N.: That is, the approach is similar to the aforementioned and discarded second well-known solution. In all effect, as already said, the subject matter of the independent claims of the two US patents was the gain calibration of the master tower transmitter (US 6,253,077 B1) and the master tower receiver (US 6,308,080 B1). A true incentive to improve the AGC circuitry upon the common knowledge in the field seems not to appear.

## OBJECTS OF THE INVENTION

The main object of the invention is thus to overcome the drawbacks of the point-to-multipoint systems of the prior art concerning the provision of reliable reception and transmission AGC circuitry at the slave stations, and to indicate a power gain control method adapted to this purpose.
Other object of the invention is that to extend the benefits of the previous solution to the radio relay systems.

## SUMMARY AND ADVANTAGES OF THE INVENTION

According to the present invention, such an object is achieved by means of a gain control method in a radiocommunication system including a master station connected two-way with at least a slave station, having the features called for in the claims that follow, these claims forming an integral part of the description herein. The method is applicable as in point-to-multipoint as in point-to-pint systems. According to the method of the present invention, a slave configures itself in such a way that an initial communication is possible, even if with poor performance. As soon as a communication between the master and a slave station is achieved, the master will start those operation usually named "registration" or "ranging" or "sign-on". During or immediately after this phase a piece of information related to the distance from the master is transmitted downlink to the slave station, which use the received information to properly configure the "semistatic" part of the reception power gain/attenuation and/or the "semistatic" part of the transmission power gain/attenuation. The dynamic range of the AGC circuitry is strongly reduced consequently to compensate the only variable fading. A distance-related piece of information is either an opportunely coded measures of the distance, or directly the free space attenuation of the radio path due to the distance. If the received information is the fixed path-loss the slave uses it directly, while if the received information is the distance the slave converts it into the corresponding path loss by means of a well known formula. A distance-related piece of information is usually easy to be determined in the master station. A first approach is that to measure the synchronisation delay between the master and the slave burst during the registration phase and obtain the distance-related information by using well known expressions. A second approach is that to read it from an installation database accessible by the master. The first approach is preferred because makes the system not installation depending, at least for this feature. The immediate advantage is the one of not to have to measure this distance on the map.

The availability of distance-related information in the slave stations opens up to several optimizations of the transmission and reception path that can be embodied in the invention. Thanks to the method of the invention the AGC circuitry of the slave stations will properly work in the nominal range even if the available range is not large enough to cover all the situations. Differently from the known methods, the reduction of the transmission/reception gain/attenuation dynamic doesn't request any particular setting at the slave premises during the installation phase, but is automatically performed by the slaves upon reception of the distance-related information from the master. This allows a cost-effective design of communication equipment and an improvement of equipment performance. The idea of transmitting by the master downlink to the slaves pieces of information related to the respective distances between the slaves and the master antennas, is the key which enables each slave to set by itself the fixed part of the total power gain/attenuation. There is not a clear indication of this feature in the mentioned prior art; it descends that the only possible way offered by the prior art to the slaves for calculating by itself the fixed power gain/attenuation, is the classical way based on the RF path loss calculation in correspondence of the reception of a Broadcast Common Control Channel (i.e.: BCH, BCCH, CCC, etc.) transmitted at maximal power (known in advance by the slave). This way is not completely reliable because of the possible multipath fading that can counterfeit the result (some precautions are needed).

Considered the specific technical characteristic of the invention based on the acquisition of the distance measure by the slave at the begin of a particular initial protocol phase such as registration, during which the slave transmission is not yet optimised, the measure of the distance executed its own by the slave cannot be proposed. On the other hand the slave has not an installation register in its premises; it can be easily argued the effectiveness of the invention. A final obvious remark is that the wording "power gain/attenuation", although evident at glance, is in reality redundant: "power gain" is enough; it is in fact well known that a negative logarithmic gain is equal to an attenuation, so as a natural gain lower than the unit.

As far as concerns the application of the method of the invention in point-to-point systems, radio relays are classical point-to-point systems comprising a chain of line-of-sight repeaters connected between terminal stations at the two ends. In these systems when radio hops with different lengths are taken into account, a power level spreading similar to the point-to-multipoint systems exists. This means that each stations adapts transmit power and is able to receive with a broad range of received power values according to the actual distance between adjacent stations and the instantaneous propagation conditions. The teaching of the method can be easily extended to the point-to-point systems, for example activating each station to be either master or slave in accordance with the relevant method.

Other object of the invention is a radiocommunication system in which the slave stations operate in accordance with the method disclosed above, as disclosed in the relevant system claims, inheriting the advantages as for point-to-multipoint as for point-to-point systems.

## BRIEF DESCRIPTION OF THE DRAWING

The features of the present invention which are considered to be novel are set forth with particularity in the appended claims. The invention, together with further objects and advantages thereof, may be understood with reference to the following detailed description of an embodiment thereof taken in conjunction with the accompanying drawings given for purely non-limiting explanatory purposes and wherein:

- **fig.1** shows a general block diagram of a point-to-multipoint radio network including a master station which communicates two-way with several fixed slave stations placed at different distances from the master;

- **fig.2** shows a general block diagram of a partial radio relay system;
- **fig.3** shows the functional architecture of a master station whose protocol is adapted to cooperate with the slave stations, in order to implement the present invention;
- **fig.4** shows the functional architecture of a slave station of the present invention;
- **fig.5** shows a circuital representation of a transmission block SGC included in the slave station of fig.4.
- **fig.6** shows a circuital representation of a transmission block REG-PW-TX-AMP included in the slave station of fig. 4; and
- **fig.7** shows a possible displacement of two slave stations from the master in the scenario of fig.1 or 2 and a diagrammatical representation of the subdivision of the power gain inside the two slave stations obtained by the present invention.

## DETAILED DESCRIPTION OF AN EMBODIMENT OF THE INVENTION

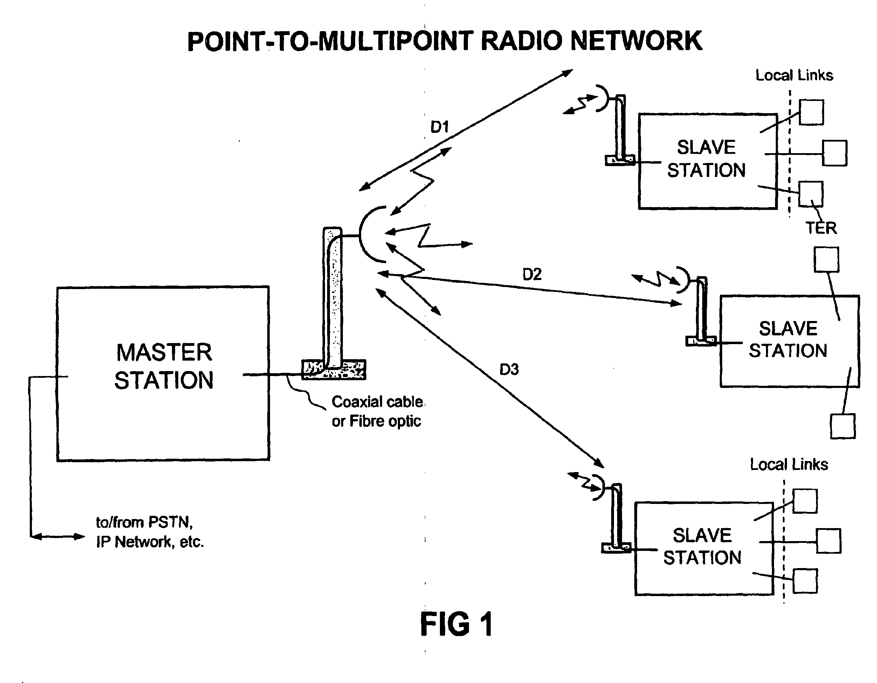

In **fig.1** a general block diagram of a point-to-multipoint radio network is depicted. As far as concern the following description the term "network" and "system" has to be considered synonyms. Because of its great generality the embodiment of the invention is not apparent in the network of fig.1 and the network could be confused with the prior art. In all effect the features of the invention will be highlighted from the description of the operation. The network includes a master station and a plurality of slave stations placed at different distances D1, D2, D3 from the master. For the sake of simplicity the only slave stations are locally connected to a variable number of user terminals TER. The master station is further connected via radio with other master stations and by physical bearer (wiring, cable, optical fibres) to a PSTN, ISDN, IP Network, etc. The depicted scenario is limited to fixed master stations, fixed slaves stations, and fixed user terminals. To be fixed is not mandatory for Terminals TER, at least as far as concerns the aims of the present invention, so that the possible applications of the point-to-multipoint network are substantially the same as those indicated in the cited prior art.

In operation, as already said, two-way transmissions between master and each individual slave are subjected to unforeseeable multipath fading and rain fading which are variable due their statistical nature, and generally different on the two directions of the transmission. In addition to said fading there is a free space path loss which only depend on the distance (D1, D2, or D3) between the slave and the master antennas. This attenuation is completely foreseeable and calculable by the following expression:

$$A = kA_{free\ space} = k\frac{\left(4\pi\, D/\lambda\right)^2}{G_T G_R},$$

$$(1)$$

where:

- $\lambda$ is the carrier wavelength;
- D is the distance between the slave and the master antennas;
- $G_T$ and $G_R$ are the gains of the transmission and reception antennas, respectively;
- $k$ takes into account some constant attenuation values depending on, i.e.: cable loss, in-band filter attenuation, etc.

By the combined effect of foreseeable and unforeseeable losses, signals with large variable power levels are possible at the two ends of a radio path. For the estimate of the total path loss some other statistical parameters have to be considered in the worst case, i.e.: temperature, ageing, inaccuracies, etc.; at the end an 80 dB value is realistic.

The master station implements typical master functions described in the various ETSI specifications relevant the BRAN standard. For the limited extent of the fig.1, considered as known, some typical master functions are discussed. Since from the installation phase the master shall keep memory and have access to the system configuration and the main operational parameters of the various slave stations. Among those parameters are included, i.e: number of the configured slave stations, distance from the slave and the master antennas, maximal transmittal power of the slaves, accessing and duplexing type, modulation and redundancy code, scrambling code, encryption, billing policy, etc. During the exercise the master shall continuously broadcast the common information towards the slaves and monitoring the access channels in uplink in order to detect the access requests from the slaves. At each access detection, a protocol procedure usually named "registration" or "ranging" or "sign-on" is started. Depending on the access type and the capacities of the slave, the master assigns to the accessing slave a pool of dedicated resources (frequency, timeslot, code, dedicated signalling channels, ad-hoc parameters, etc.) for signalling and traffic needs, seeking to balance among the various requests; this presupposes a fairness arbitration policy. Depending on the destination of the call, the master sets up a routing path towards a network element either inside or outside the P-to-MP network. Other well known procedures largely implemented on the physical channel are Frame Synchronisation (FS) and Power Control (PC), both of them allow the calculation of the distance between the slave and the master antennas during the registration phase but the first is the preferred one. Relevant standard for FS and PC are the following:

- "ETSI TS 101 999 - Broadband Radio Access Networks (BRAN) ; HIPERACCESS; PHY protocol specification", and
- "ETSI TS 102 000 - Broadband Radio Access Networks (BRAN) ; HIPERACCESS; DLC protocol specification".

Frame synchronisation is usual in digital systems it allows the exact decoding of the initial burst by the slave and the maintenance of the synchronisation status during the time. Contrarily to the GSM, the maintenance of the synchronisation is not crucial when the slave stations are fixed. FS includes the following steps:

a) the master station transmits on the synchronisation channel a particular sequence of bytes corresponding to a "synchronisation" burst known in advance by the slave, and the indication of a preferred fixed delay D between the downstream signal and the upstream signal not depending on the distance between the two stations, but depending on other requirements such as the one of promoting an easier implementation of the apparatuses by avoiding to emit and receive simultaneously;

b) the slave station which access first time the network receives and stores the synchronisation burst, immediately after it performs the autocorrelation of the stored burst with a copy of the synchronisation sequence locally stored. The occurrence of the correlation peak indicates a precise delay from the begin of the burst, that is means synchronisation. The slave, as soon as it synchronises, transmits an upstream protocol-specific burst with the given delay D;

c) the master station receives the synchronised protocol-specific burst transmitted from the slave and calculates the distance between the two antennas according to the time elapsed between its transmission of the "synchronisation" burst and its reception of the upstream burst;

d) the master station transmits to the accessed slave station a piece of information related to said distance. Two opportunities are open, namely: 1) - the information is an opportunely coded measure of the distance; 2) - the information is an opportunely coded measures of the free space attenuation of the radio path depending on said distance;

e) the accessed slave station receives and decodes the information related to said distance and use it in a way that will be detailed later on.

In accordance with another embodiment of the invention the master station acquires the information related to the distance during the installation phase, and transmits it to the accessing slave during, or immediately after, the registration phase. This means that the installation register accessible to the master keeps stored either the distances or the corresponding free space attenuation, or both. The invention in subject concerns the AGC circuitry included in the only slave stations, for the following three accommodation cases: reception only, transmission only, both reception and transmission. For the remaining description the master is supposed able to accommodate in the known way the dynamic of its reception and transmission signals.

Power Control (PC) is carried out for regulating the transmission power of the slaves (uplink PC) and the master (not mandatory downlink PC). PC procedure involves both the master and each slave in asymmetrical way, namely, the master is the one that decides the entity of the power correction both for uplink and downlink; the slaves only transmit to the master some measures performed on the reception signals and execute PC commands forwarded by the master. Power regulations are mainly requested to satisfy an overall quality requirement, in such a case the dedicated transmissions are adapted to the receptions at "working" level, in order to avoid the propagation of dangerous cochannel interferences inside the system and reduce the adjacent channel interferences, otherwise due to the near-far effect. Power control can be executed either open or closed loop. As concerns the rough calculation of the distance, the master station transmits both its transmitting power level and its "desired" receiving level to the slave stations, so they can calculate the distance from the formula (1) and a rough power level for the first transmission. In the end the master execute routinely procedures for the maintenance of the various slaves.

The slave stations implements typical slave functions described in the various ETSI specifications relevant the BRAN standard. Among these functions there are: the listening of the broadcast channels in order to receive information relevant to their operation; the initial configuration to send an access request and participate to the registration phase;

frame synchronisation, power control, etc. The reception of the information related to the distance between the slave and the master antennas and the use of this information as will be detailed later on. Other functions of the slaves are the ones involving the connection and service of terminals TER. The details of services are depending on the type of terminals which are connected and are not further investigated.

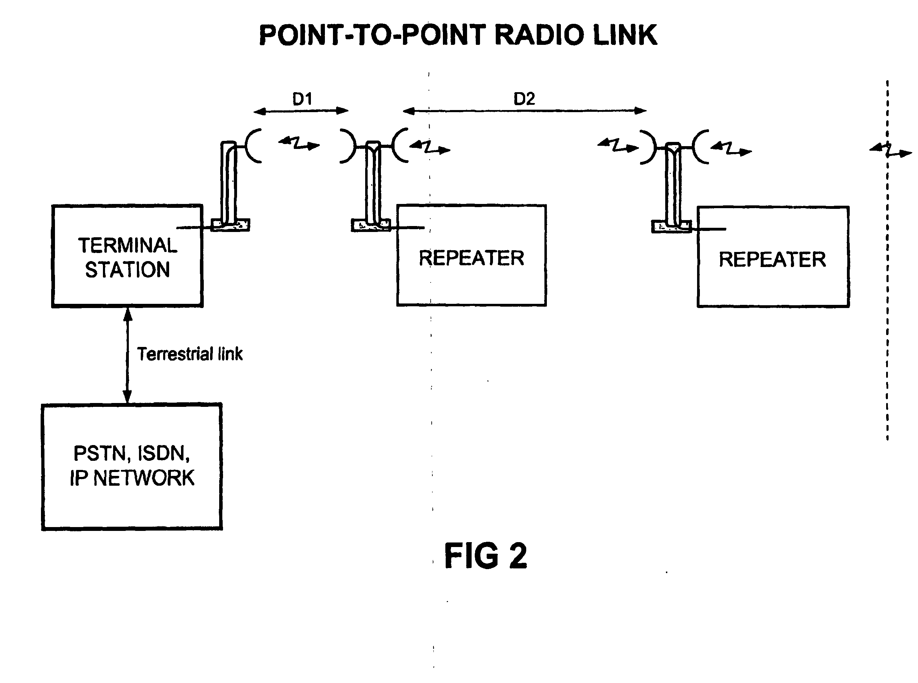

In **fig.2** a block diagram of a radio relay system is depicted. Only the left part of the radio link is shown for brevity. The system includes a terminal station and a plurality of repeaters placed at different distances to each other. Radio relays are classical point-to-point systems comprising a chain of line-of-sight repeaters connected between terminal stations at the two ends. In those systems when radio hops with different lengths are taken into account, a power level spreading similar to the point-to-multipoint systems exists. This means that each stations adapts transmit power and is able to receive with a broad range of received power values according to the actual distance (D1, D2) between adjacent stations and the instantaneous propagation conditions. Generally one of the two terminal stations is the master of the whole system but this rule is not mandatory and other choices are possible, for example: one of the stations play the role of "master" and another one may play the role of "slave", or both can play both roles at the same or different times. The master functions are similar to the ones already listed for the preceding Fig.1. The slaves run into the limitation to be all simultaneously active for assuring the continuity of the transmission through the whole link. Nevertheless, in case a repeater is faulty and has to be temporarily put out of service, a protection system automatically switches off the faulty repeater and a hot standby replacement one is connected to the same antenna. In such a case the incoming repeater may have or not the knowledge of the length of the hopes at the two sides. Let us suppose the first case: well, the only knowledge of the distance is not enough to optimise the two hope communications. In fact some internal setting such as the programmable voltage references of the AGC circuitry couldn't be sufficiently tuned to the effective values at changeover. In such a case the present invention teaches of how has to be exploit the distance information for optimising those parameters which are power level dependent in order to obtain reliable communications at the ends of the two radio paths.

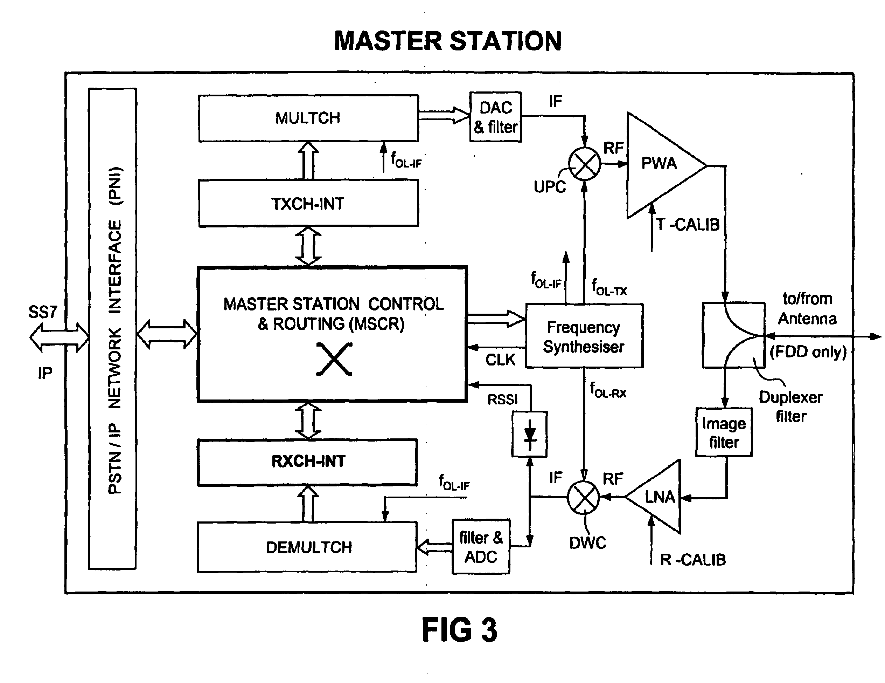

In **fig.3** a block diagram of the master station of the Figures 1 and 2 is depicted. Without introducing limitation to the invention, the considered architecture is referred to the case of TDMA-FDD using (for brevity) only one carrier uplink and a different carrier downlink. With reference to the Figure the following functional blocks are included: PSTN / IP NETWORK INTERFACE (PNI), MASTER STATION CONTROL & ROUTING (MSCR), TXCH-INT, MULTCH, DAC & filter, UPC, PWA, Duplexer filter, Image filter, LNA, DWC, filter & ADC, DEMULTCH, RXCH-INT, and Frequency Synthesiser. The MSCR block is interfaced to almost all the other blocks, namely: PNI for the exchange of traffic and signalling channels between P-to-MP network and PSTN/IP networks; to TXCH-INT and RXCH-INT to interface the whole configured slaves and the other masters; and to the Frequency Synthesiser for the generation of the system clock signal CLK and the analog local oscillator signal $f_{OL-TX}$ and $f_{OL-RX}$ used in the Up conversion from IF to RF and the Down conversion from RF to IF, respectively, plus the oscillator signal $f_{OL-IF}$ for the conversion from base band to the Intermediate Frequency (IF) and vice versa. In operation, considering the transmission side at first, the main block MSCR routes the base band reception channels at the input of the interface TXCH-INT. Block TXCH-INT performs typical base band processing for all the transmitted channels, i.e.: TX filtering, coding (parity, convolutional, fire), interleaving, burst formatting, scrambling, ciphering, and digital modulation (M-PSK, M-QAM, TCM, etc.). The modulated digital signals are sent to the block MULTCH which performs time multiplexing of the digital channels into as many time slots of a TDMA frame at higher speed. The TDMA signal may be converted to IF contemporarily with the multiplexing by means of the $f_{OL-IF}$ signal. The TDMA digital signal is analog converted and the PAM reconstructed by means of block DAC & filter. The IF filtered signal is sent to the mixer UPC for up conversion to Radiofrequency RF by means of the local oscillator signal $f_{OL-TX}$ at the output of the Frequency Synthesiser. The RF signal is amplified by the PWA power amplifier and forwarded to a first port of the Duplexer filter. This filter acts like a three-port circulator which conveys the RF transmission signal to the coaxial cable connected to the antenna, and the RF reception signal coming from the antenna towards the Image filter at the input of the Low Noise Amplifier LNA. The reception amplified signal RF is sent to the mixer DWC for down conversion to IF by means of the local oscillator signal $f_{OL-RX}$. The analog IF signal is band pass filtered and digitally converted by block filter & ADC. Block DEMULTCH performs time demultiplexing of the IF TDMA frame into singular timeslots corresponding to as many channels. This presupposes the IF to base band conversion by means of the $f_{OL-IF}$ signal (with a digital mixer or down sampling), the clock extraction and time synchronisation (i.e. exploiting suitable synchronisation channels for frequency (FCCH) and time (SCH)). Each digital channel is forwarded to the interface block RXCH-INT which carries out all the base band processing, namely: RX filtering and equalisation, burst synchronisation, digital demodulation, deciphering, descrambling, burst disassembling, deinterleaving, decoding, and error correction. Individual equalisation is based on the estimation of the pulse response of the relevant channel in correspondence of a training sequence positioned in the preamble or in the midamble of each transmitted burst (depending on the burst structure). This presupposes the detection of the training sequence, usually obtained by the correlation with a stored sequence. The detection allows to have an estimate of the transmission delay of each individual burst used for synchronise the burst. The MSCR block executes all the master functions explained in the description of **fig.1,** either typical or the particular ones needed for carrying out the present invention: for example the calculation of the distances of the slaves upon the reception of the respective transmission delays. Furthermore MSCR routes a digital channel towards its destination, either: to another slave station, to another master, to the external PSTN / IP networks by means of the PNI interface. The last converts the signalling protocols used internal to the P-to-MTP network into the SS7 Common Channel signalling used by the PSTN network or the IP protocol used by the homonym network. Transcode and Rate Adaptation (TRAU) is a further functionality implemented inside the PNI interface and/or the MSCR block. For completeness, the Frequency Synthesiser sends a main clock CLK to the block MSCR. Moreover the analog IF reception signal is rectified to obtain a signal RSSI (Received Signal Strength Indicator) sent to the MSCR control block that uses the relevant indication in the uplink Power Control procedure together with BER (Bit Error Rate) at the output of the demodulators. The downlink Power Control procedure is quite more complicated than uplink, mainly because other than compensating power attenuations on each individual paths, a minor compensation on the cumulative signal transmitted to, or received from, the remote antenna must also be consider. This problem has been well highlighted in the two US patents previously commented. The individual power control downlink is carried out digitally inside the block TXCH-INT; it is supported by the relevant measures performed by each slave and transmitted to the master. As the cumulative compensation concerns, two calibration signals, T-CALIB and R-CALIB, are provided to a gain regulation control input of the PWA and LNA amplifiers, respectively.

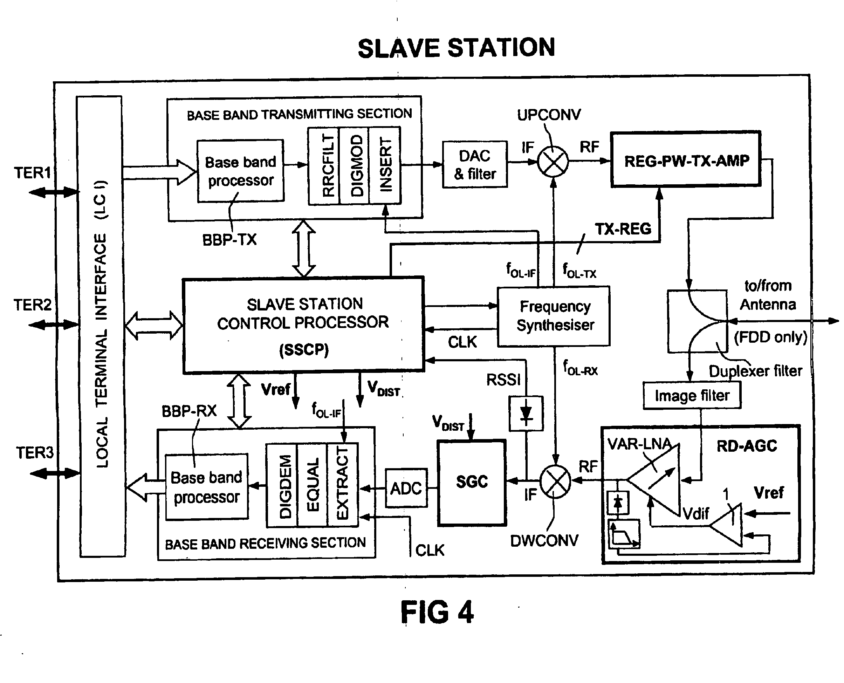

In **fig.4** a block diagram of a slave station of fig.1 is depicted, the marked blocks and bold type indicates those parts and signals mostly involved in the invention. Omitting the interface towards the local terminal TER, the description is valid also for the slaves of fig.2. With reference to the Figure the following functional blocks are included: LOCAL TERMINAL INTERFACE (LCI), SLAVE STATION CONTROL PROCESSOR (SSCP), Frequency Synthesiser, BASE BAND TRANSMITTING SECTION (including BBP-TX processor, RRCFILT, DIGMOD, and INSERT), DAC & filter & IF conv, UPCONV, REG-PW-TX-AMP, Duplexer filter, Image filter, RD-AGC, DWCONV, SGC, ADC, and BASE BAND RECEIVING SECTION (including EXTRACT, EQUAL, DIGDEM and BBP-RX processor). The SSCP block is interfaced to almost all the other blocks, namely: LCI for the exchange of traffic and signalling channels between the slave station and the various terminal TER1,2,3; BASE BAND TRANSMITTING and RECEIVING SECTIONS for controlling and managing operations; Frequency Synthesiser for the generation of the system clock signal CLK and the analog local oscillator signals $f_{OL-TX}$ and $f_{OL-RX}$ used in the Up conversion from IF to RF and the Down conversion from RF to IF, respectively, plus the oscillator signal $f_{OL-IF}$ for the conversion from base band to IF and vice versa. The SSCP processor block is connected to the marked blocks: RD-AGC, SGC, and REG-PW-TX-AMP in order to implement, together with the MASTER STATION, the technical features of the present invention. To this aim the SSCP processor sends the following signals: Vref, $V_{DIST}$, and TX-REG to the relevant blocks in the listed order.

In operation, considering the transmission side at first, each terminal TER1,2,3 transmits its own coded information: voice, data, signalling, on the respective physical medium connected to the LCI interface. The last performs line adaptation (clock extraction, buffering, and equalisation) and the interfacing functions relevant to the type of terminal connected, i.e. telephone, printer, personal computer, card reader, etc. Transcode and rate adaptation is also performed inside the LCI before sending the digital signal to the base band processor BBP-TX. The last executes the typical baseband processing, i.e.: coding (parity, convolutional, fire), interleaving, burst formatting, scrambling, and ciphering. Successively the signal is filtered by the TX filter RRCFILT (Root Raised Cosine) and digitally modulated (M-PSK, M-QAM, TCM, etc.) by the modulator DIGMOD. The stream block INSERT is a TDMA frame formatter which inserts the modulated signal into the assigned time slot, and also up converts to a digital IF using the $f_{OL-IF}$ signal. The IF digital signal is analog converted and band pass filtered by DAC & filter block, and the analog IF signal converted to RF by the mixer UPCONV which receives the local oscillator signal $f_{OL-TX}$. The RF signal is power amplified by the AGC block REG-PW-TX-AMP and forwarded to a first port of the Duplexer filter connected to the remote antenna. The RF reception signal coming from the antenna crosses a second port of the Duplexer filter and reaches the Image filter at the input of the AGC block RD-AGC. The reception amplified signal RF is sent to the mixer DWCONV for down conversion to IF by means of the local oscillator signal $f_{OL-RX}$. Moreover the analog IF reception signal is rectified to obtain a signal RSSI (Received Signal Strength Indicator) sent to the SSCP control block that uses the relevant indication in the downlink Power Control procedure together with BER (Bit Error Rate) at the output of the demodulators. The analog IF signal reaches the AGC block SGC and successively the ADC block for digital conversion before entering the block EXTRACT. The last performs time demultiplexing of the IF TDMA frame into singular timeslots among which the one assigned to the slave's channel. This presupposes the IF to base band conversion by exploiting in known way the $f_{OL-IF}$ signal. The assigned digital channel is forwarded to the interface equaliser EQUAL which digitally filter the incoming signal by a RRC filter and estimates the pulse response of the channel. At the end of the equalisation an estimate of the transmission delay is obtained and the burst synchronised consequently. The base band processing executes all the remaining base band operation, namely: digital demodulation, deciphering, descrambling, burst disassembling, deinterleaving, decoding, and error correction. Finally the channel is forwarded either to the LCI interface to be transmitted to the addressed terminal TER or to the SSCP processor for the insertion into a transmission time slot assigned in uplink on the basis of the routing information get from the MASTER.

The SSCP block executes all the slave functions explained in the description of **fig.1,** either typical or the particular ones needed for carrying out the present invention, for example: the access to the master to be registered, the calculation of the fixed attenuation upon the reception of the message including the measure of distance, the translation of the fixed attenuation into opportune control signals Vref, $V_{DIST}$, TX-REG of the various AGCs or other devices to be optimised, the sending of said control signals to the relevant devices. The signal $V_{DIST}$ is a voltage value corresponding to the one which sets the power gain for compensating the attenuation calculated on the basis of the distance information sent by the MASTER. Digital signals Vref and TX-REG are other reference voltage values. Blocks SGC and REG-PW-TX-AMP will be described later while RD-AGC is visible in fig.4; it includes a Variable gain Low Noise Amplifier VAR-LNA and a differential amplifier 1 connected as in the classical AGC scheme. Voltage Vref (analog converted even if not indicated) is established at a reference input of the differential amplifier 1, while the other input is connected to the output of an envelope detector (diode followed by a low pass filter) whose input is connected to the RF output of the VAR-LNA RF amplifier to feedback the variable gain. The output Vdif of the differential amplifier 1 closes the loop forcing the power at the output of the AGC to be equal on the average to the reference voltage Vref. The internal representation of the block RD-AGC is given for explicative but non limiting example, solid state devices implementing AGCs with the desired requirements are currently available in commerce. The two remaining AGC blocks SGC and REG-PW-TX-AMP operate in similar way as RD-AGC. The design choice is that to entrust the task of compensating the fast variable Rayleigh attenuations and the rain attenuations on the downlink path to the intermediate frequency AGC labelled as SGC. This is done by fixing a value of the reference Vref in a way that, in absence of fading at the input of the low noise variable amplifier VAR-LNA sets a gain equal to the central value of the nominal gain range.

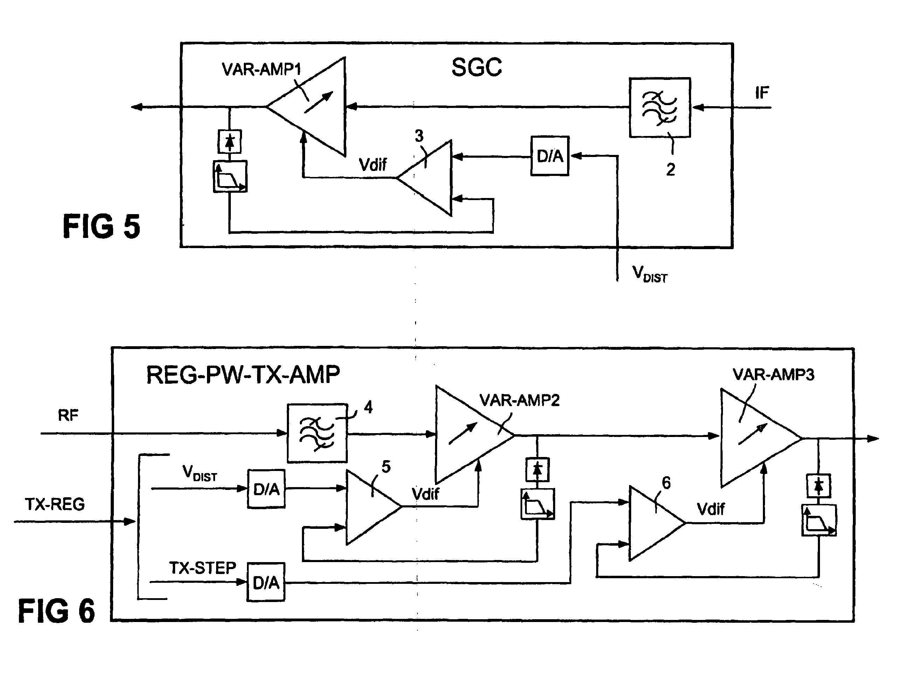

**Fig.5** shows the AGC which constitutes the block SGC. It includes the same feedback scheme as the one constituting the upstream block RD-AGC. The input signal IF is band pass filtered before reaching the input of the IF variable amplifier VAR-LNA. The digital voltage reference $V_{DIST}$ is digital-to-analog converted before reaching the reference input of the differential amplifier 1. The AGC regulates its output to follow the reference signal $V_{DIST}$. The design choice is that to entrust the task of compensating the semistatic attenuation due to the distance between the slave and the master antennas to the IF AGC block SGC. This is done by fixing the voltage references $V_{DIST}$ for producing the desired amplification/attenuation inside the nominal gain range of the IF AGC.

**Fig.6** shows the two cascaded AGCs, similar to the preceding scheme, constituting the block REG-PW-TX-AMP. The digital signal TX-REG includes the signal $V_{DIST}$ and a signal TX-STEP, both are digital-to-analog converted before reaching the reference inputs of the differential amplifier 5 and 6 of the two AGCs. The RF signal after conversion crosses a band pass filter 4 and reaches the input of a first variable power amplifier VAR-AMP2 belonging to the first AGC which regulates its output to follow the reference $V_{DIST}$. The regulated output enters the input of a variable amplifier VAR-AMP2 belonging to the second AGC which regulates its output to follow the reference TX-STEP. The design choice is that to entrust the task of compensating the near-far effect at the MASTER antenna to the first RF AGC. This is done by fixing the voltage references $V_{DIST}$ for producing the desired amplification/attenuation inside the nominal gain range of the first RF AGC. Another design choice is that to entrust the task of compensating the fast variable Rayleigh attenuations and the rain attenuations on the uplink path to the second RF AGC. This means having to feed the slave antenna with the stepped RF power requested by the MASTER during the uplink power control. This is done by aligning the stepping range of the signal TX-STEP with the nominal gain range of the second AGC.

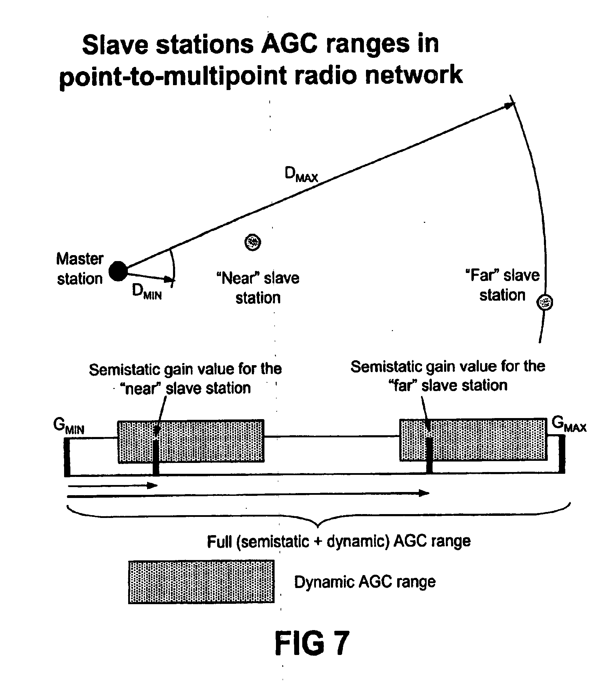

The causes which have effect on the variability of the reception and transmission power level have been already investigated, but the successive fig.7 will give some other insights into the problem of how to set the AGC gain in the more appropriate way.

The scenario of **fig.7** includes a master and two slave stations: a first one at the maximum permitted distance $D_{MAX}$ from the master, and the other at a given distance $D_{INT}$ between $D_{MAX}$ and the minimum allowed distance $D_{MIN}$. In the same Figure the full gain range of the slave's AGC between $G_{MIN}$ and $G_{MAX}$ is depicted with a horizontal bar. Along this bar the so-called "semistatic" gain values of the two slaves, mainly depending on the distances $D_{INT}$ and $D_{MAX}$ are indicated with two thick lines. Partially superimposed to the two thick lines and inside the full gain range, two other horizontal bars indicate the identical fast-varying ("dynamic") gain range of the two AGCs to counteract fading phenomena. The teaching of the Figure is clear: if not otherwise provided in advance a reception or transmission AGC, indifferently, shall assume the full gain range $G_{MAX} — G_{MIN}$. The large variation in the received signal level at the slave side can be counteracted using an AGC circuitry with a large fast-varying working range $G_{MAX} — G_{MIN}$. A similar AGC should be very expensive and not easy to design. On the other hand a so large dynamic will drive the gain of the commercial AGCs out of their nominal ranges.

The solution proposed in fig.7 is that to split the complete AGC working range into two parts: the configurable gain range and the dynamic gain range. This open the way to different designs but an idea of the width of the two ranges is needed. In high frequency range (above 15 GHz) the maximum signal level variations in received power at a fixed distance due to fading (rain) are lower than the maximum variation due to the only spread of the distances. The last is much more important. To better understand the advantage, if we consider a point-to-multipoint system with a minimum distance of the slave station of 50 meters and a maximum distance of 5 km, running at 26 GHz radio frequency in rain zone K and the very common availability target of 99.99%, the distance span accounts for a system gain range of 40 dB while the rain fading is 25 dB. The teaching of the invention allows to split the 65 dB range (25+40 dB) to be handled by a totally dynamic AGC into two narrower ranges, namely a 25 dB dynamic range and a configurable 40 dB semistatic range.

The example shows a disparity in the two gain ranges which favours the reduction of the fast-varying range, that is less expensive commercial AGCs are usable. This configurable gain will span over a larger range, in order to counteract at least the signal level variations depending on distance between master and slave stations. Doing so, it is possible to design a cost-effective circuitry without any worsening in the equipment performance. A semistatic gain or attenuation, in proper position of the receiving chain, can be regulated in such a way all the components will work in a reduced signal range, where they offer the best performance. This means for example that it is possible to make the power amplifier operate around a working point where its linearity is maximized. Same advantages can be obtained for example in the noise figure by properly setting the receiver power range.

In a preferred embodiment, as soon as it is switched on, the slave station starts slowly varying its "semistatic" gain / attenuation level to properly receive and decode the radio signal transmitted by the master station. Up to this point, the slave station is able to decode the downstream signal and to set a rough value of the upstream transmission level, but the receiving and transmitting semistatic gain / attenuation levels are not correctly configured to make the dynamic range properly counteract all the possible fading phenomena. When the master station receives a signal transmitted by the slave station, it transmits the distance information to the remote station; the distance may be retrieved from a database or calculated during the registration phase or initial transmissions of the slave station, according to different possible embodiments. According to the present invention this distance information will be sent to the slave station. The slave station uses the distance information to automatically configure the "semistatic" gain / attenuation level in the best way.

In the light of the above considerations with reference to the fig.7 and the following considerations, the choices carried out in the Figures 4, 5 and 6 concerning the linking of the voltages references $V_{DIST}$, Vref, TX-STEP with the various AGCs seems to be a good design. In fact, when a slave station is at the boundary of the service zone the received signal is week and maximum semistatic gain is needed. In such a case the received RF signal could be comparable with the noise generated internally to amplification chains. A good design shall take into account the effect of the noise. As known, the noise figure depends on the noise introduced by the first amplifier plus the noise figure of each successive amplification stage divided by the total amplification at the input of that stage. That is, the first RF amplifier must be low noise whatever is the gain and a high gain second amplifier is better. The embodiment of the invention follows this indication, in fact, the first amplifier VAR-LNA is low noise and the cascaded amplifier VAR-AMP1 has the semistatic gain range greater than the dynamic. Nevertheless the above arguments, if particular reasons request it, several possible tandem of semistatic and dynamic AGCs diversely placed into RF and IF are feasible, both for reception and transmission. The following table shows the feasible combinations:

**TABLE 1 - FEASIBLE COMBINATIONS OF TANDEM AGCs**

| RECEPTION | | | | TRANSMISSION | | | |
|---|---|---|---|---|---|---|---|
| RADIOFREQ. | | RF | IF | RADIOFREQ. | | IF | RF |
| AGC1 | AGC2 | AGC1 | AGC2 | AGC1 | AGC2 | AGC1 | AGC2 |
| Vref | Vdist | **Vref** | **Vdist** | **Vdist** | **TX-STEP** | Vdist | TX-STEP |
| Vdist | Vref | Vdist | Vref | TX-STEP | Vdist | TX-STEP | Vdist |

In the table the recommended combinations shown in fig.4 and 6 are bold. The voltage reference Vref and TX-STEP take care of dynamic AGCs while Vdist the semistatic ones.

## Claims

1. Power gain control method for use in a radiocommunication system including at least a master station able to communicate with at least a fixed slave station, the master acquiring and storing relevant configuration and operational parameters of the slave, monitoring the accesses of the slave and assigning to it physical resources, the slave including means for receiving and/or transmitting at variable power gain, **characterised in that** it includes the following steps:

   • the master station acquires a piece of information related to the distance between the antenna of the slave station and its own antenna;
   • the master station transmits to the slave station said piece of information;

• the slave station receives said piece of information and translates it into at least a semistatic gain control signal keeping a fraction of said variable power gain configurable in order to compensate the free space attenuation of the radio path due to said distance only.

2. The power gain control method of the claim 1, **characterised in that** the slave station calculates a dynamic gain control signal in order to additionally compensate the unforeseeable fading.

3. The power gain control method of the claim 1 or 2, **characterised in that** said piece of information related to the distance is an opportunely coded measure of the distance.

4. The power gain control method of the claim 1 or 2, **characterised in that** said piece of information related to the distance is an opportunely coded measure of the free space attenuation of the radio path depending on said distance.

5. The power gain control method of one of the preceding claims, **characterised in that** the master station acquires said information related to the distance during an installation phase and transmits it to the slave during or immediately after a slave registration phase executed immediately before a reliable communication is started.

6. The power gain control method of one of the preceding claims other than 5, **characterised in that** the master station acquires said respective piece of information during a first access of the slave station and transmits said piece of information during or immediately after a slave station registration phase executed immediately before a reliable communication is started.

7. The power gain control method of one of the preceding claims, **characterised in that** the slave station optimises further receiver and/or transmitting settings and operational parameters according to the relevant piece of information related to the distance.

8. The power gain control method of one of the preceding claims, **characterised in that** said means for receiving at variable power gain are usable by the slave station in downlink closed loop power control for compensating said unforeseeable fading on the reception signal, and said means for transmitting at variable power gain are usable by the slave station for transmitting to the master station some measures related to the quality of the reception signal.

9. The power gain control method of one of the preceding claims, **characterised in that** said means for transmitting at variable power gain are usable by the slave station in uplink closed loop power control for compensating said unforeseeable fading, under the control of the master station that measures the quality of the reception signal.

10. Power gain control method of one of the preceding claims, **characterised in that** the system is of the radio relay type comprising chained repeater stations differently spaced to each other, and one of the stations playing the role of master and the other stations playing the role of slave, or two or more stations playing both roles at the same or different times, and either automatically or upon a command issued by the actual master a hot standby repeater replaces an in-service repeater, and the incoming repeater has knowledge of the length of the hopes at the two sides and uses this knowledge for optimising some internal parameters which are power level dependent, such as the programmable voltage references of the AGC circuitry, in order to obtain reliable communication at the ends of the two radio paths.

11. A radiocommunication system including at least a master station able to communicate with at least a fixed slave station, the master having means (MSCR) for acquiring and storing relevant configuration and operational parameters of the slave, means (MSCR) for monitoring the access of the slave, means (MSCR) for assigning physical resources to the slave, and the slave having means for receiving and/or transmitting at variable power gain (RD-AGC, SGC, REG-PW-TX-AMP), **characterised in that** it includes:

   • master station means (MSCR, TXCH-INT) for calculating the distance between the slave and the master antennas and convert it into a piece of information related to said distance;
   • master station means (MSCR, TXCH-INT, MULTCH, PWA) for transmitting to the slave said piece of information;
   • slave station means for receiving said piece of information (RD-AGC, SGC, SSCP); and
   • slave station processing means (SSCP) for translating said piece of information into at least a semistatic power gain control signal (Vdist) suitable to be applied to said means for receiving and/or transmitting at variable power gain in order to keep a fraction of said variable power gain configurable for compensating the free space attenuation of the radio path due to said distance.

12. The radiocommunication system of the preceding claim, **characterised in that** said slave station processing means (SSCP) sets a dynamic power gain control signal (Vref) suitable to be applied to said means for receiving and/or transmitting at variable power gain in order to additionally compensate the unforeseeable fading.

13. The radiocommunication system of the preceding claim, **characterised in that** said means for receiving at variable power gain (RD-AGC, SGC) include two Automatic Gain Control circuitry or AGC in tandem, a first one (SGC) having the semistatic gain and a second one (RD-AGC) having the dynamic gain reduced by effect of said semistatic gain.

14. The radiocommunication system of the claim 13, **characterised in that** the AGC having the semistatic gain (SGC) works at Intermediate Frequency and the AGC having the dynamic gain (RD-AGC) works at Radio Frequency.

15. The radiocommunication system of the claim 13, **characterised in that** the AGC having the semistatic gain (SGC) works at Radio Frequency and the AGC having the dynamic gain (RD-AGC) works at Intermediate Frequency.

16. The radiocommunication system of the claim 13, **characterised in that** both the AGCs (RD-AGC SGC; ) work at Radio Frequency.

17. The radiocommunication system of the claim 16, **characterised in that** the AGC having the dynamic gain (RD-AGC) is placed, along the amplification chain, before the AGC having a semistatic gain (SGC).

18. The radiocommunication system of the claim 16, **characterised in that** the AGC having the dynamic gain (RD-AGC) is placed, along the amplification chain, after the AGC having a semistatic gain (SGC).

19. The radiocommunication system of the claim 12, **characterised in that** said means for transmitting at variable power gain (REG-PW-TX-AMP) include two Automatic Gain Control circuitry or AGC in tandem, a first one (VAR-AMP2, 5) having the semistatic gain and a second one (VAR-AMP3, 6) having the dynamic gain reduced by effect of said semistatic gain.

20. The radiocommunication system of the claim 19, **characterised in that** the AGC having the semistatic gain (VAR-AMP2, 5) works at Intermediate Frequency and the AGC having the dynamic gain (VAR-AMP3, 6) works at Radio Frequency.

21. The radiocommunication system of the claim 19, **characterised in that** the AGC having the semistatic gain (VAR-AMP2, 5) works at Radio Frequency and the AGC having the dynamic gain (VAR-AMP3, 6) works at Intermediate Frequency.

22. The radiocommunication system of the claim 19, **characterised in that** both the AGCs (VAR-AMP2, 5, VAR-AMP3, 6 ) work at Radio Frequency.

23. The radiocommunication system of the claim 22, **characterised in that** the AGC having the semistatic gain (VAR-AMP2, 5) is placed, along the amplification chain, before the AGC having a dynamic gain (VAR-AMP3, 6).

24. The radiocommunication system of the claim 22, **characterised in that** the AGC having the semistatic gain (VAR-AMP2, 5) is placed, along the amplification chain, after the AGC having a dynamic gain (VAR-AMP3, 6).

25. The radiocommunication system of any claim from 11 to 24, **characterised in that** includes a plurality of slave stations communicating via radio with the master simultaneously on different radio channels or in different time slots of the same channel.

26. The radiocommunication system of any claim from 11 to 24, **characterised in that** is of the radio relay type comprising chained repeater stations differently spaced to each other, and one of the stations playing the role of master and the other stations playing the role of slave, or two or more stations playing both roles at the same or different times.

## EP 1 427 117 B1

**Patentansprüche**

1. Verfahren zur Regelung der Leistungsverstärkung zur Anwendung in einem Funkkommunikationssystem, das mindestens eine Master-Station beinhaltet, die mit mindestens einer ortsfesten Slave-Station kommunizieren kann, wobei die Master-Station die relevante Konfiguration und die Betriebsparameter der Slave-Station übernimmt und speichert, den Zugriff durch den Slave überwacht und ihm physikalische Ressourcen zuweist, und wobei die Slave-Station Mittel zum Empfangen und/oder Senden mit variabler Leistungsverstärkung beinhaltet, **dadurch gekennzeichnet, dass** dieses Verfahren folgende Schritte beinhaltet:

   • die Master-Station ermittelt eine Information, die sich auf die Entfernung zwischen der Antenne der Slave-Station und ihrer eigenen Antenne bezieht;
   • die Master-Station sendet besagte Information an die Slave-Station;
   • die Slave-Station empfängt besagte Information und übersetzt sie in ein halbstatisches Verstärkungsregelungssignal, wobei sie einen Teil besagter variabler Leistungsverstärkung konfigurierbar hält, um ausschließlich die durch besagte Entfernung verursachte Freiraumdämpfung der Funkstrecke zu kompensieren.

2. Verfahren zur Regelung der Leistungsverstärkung nach Anspruch 1, **dadurch gekennzeichnet, dass** die Slave-Station ein dynamisches Verstärkungsregelungssignal errechnet, um zusätzlich unvorhersehbaren Schwund zu kompensieren.

3. Verfahren zur Regelung der Leistungsverstärkung nach Anspruch 1 oder 2, **dadurch gekennzeichnet, dass** besagte Information, die sich auf die Entfernung bezieht, ein opportun kodiertes Entfernungsmaß ist.

4. Verfahren zur Regelung der Leistungsverstärkung nach Anspruch 1 oder 2, **dadurch gekennzeichnet, dass** besagte Information, die sich auf die Entfernung bezieht, ein opportun kodiertes Entfernungsmaß der Freiraumdämpfung der Funkstrecke in Abhängigkeit von besagter Entfernung ist.

5. Verfahren zur Regelung der Leistungsverstärkung nach einem der vorhergehenden Ansprüche, **dadurch gekennzeichnet, dass** die Master-Station besagte Information in Bezug auf die Entfernung während einer Installationsphase ermittelt und sie an den Slave während oder unmittelbar im Anschluss an eine Slave-Registrierphase sendet, die unmittelbar vor Beginn einer zuverlässigen Kommunikation ausgeführt wird.

6. Verfahren zur Regelung der Leistungsverstärkung nach einem der vorhergehenden Ansprüche mit Ausnahme von Anspruch 5, **dadurch gekennzeichnet, dass** die Master-Station besagte Information während eines ersten Zugriffs auf die Slave-Station ermittelt und besagte Information an den Slave während oder unmittelbar im Anschluss an eine Slave-Registrierphase sendet, die unmittelbar vor Beginn einer zuverlässigen Kommunikation ausgeführt wird.

7. Verfahren zur Regelung der Leistungsverstärkung nach einem der vorhergehenden Ansprüche, **dadurch gekennzeichnet, dass** die Slave-Station die Empfangs- und Sendeeinstellungen sowie die Betriebsparameter entsprechend der Information, die sich auf die Entfernung bezieht, weiter optimiert.

8. Verfahren zur Regelung der Leistungsverstärkung nach einem der vorhergehenden Ansprüche, **dadurch gekennzeichnet, dass** besagte Mittel zum Empfangen bei variierender Leistungsverstärkung von der Slave-Station im geschlossenen Downlink-Leistungssteuerkreis für die Kompensation besagten unvorhersehbaren Schwunds beim Empfangssignal verwendbar sind, und besagte Mittel zum Senden bei variierender Leistungsverstärkung von der Slave-Station zum Senden einiger Maße in Bezug auf die Qualität des Empfangssignals an die Master-Station verwendbar sind.

9. Verfahren zur Regelung der Leistungsverstärkung nach einem der vorhergehenden Ansprüche, **dadurch gekennzeichnet, dass** besagte Mittel zum Senden bei variierender Leistungsverstärkung im geschlossenen Uplink-Leistungsregelkreis von der Slave-Station zum Kompensieren unvorhergesehenen Schwunds unter Kontrolle der Master-Station verwendbar sind, die die Qualität des Empfangssignals misst.

10. Verfahren zur Regelung der Leistungsverstärkung nach einem der vorhergehenden Ansprüche, **dadurch gekennzeichnet, dass** es sich um ein System vom "Richtfunktyp" handelt, das kettenförmig angeordnete Repeater-Stationen beinhaltet, die in unterschiedlichen Abständen zueinander angeordnet sind, wobei eine der Stationen die Rolle des Masters und die anderen Stationen die Rolle des Slave übernehmen oder zwei oder mehr Stationen beide Rollen gleichzeitig oder zu unterschiedlichen Zeiten erfüllen und wobei ein arbeitender Standby-Repeater entweder

13

automatisch oder auf Befehl des effektiven Master einen in Betrieb befindlichen Repeater ersetzt und der neu dazukommende Repeater die Länge der Funkfelder auf beiden Seiten kennt und dieses Wissen zur Optimierung einiger interner Parameter nutzt, die vom Leistungspegel abhängig sind, z.B. die programmierbaren Spannungsreferenzen der AGC-(Automatic Gain Control - automatischer Schwundausgleich) Schaltkreise , um eine zuverlässige Kommunikation an den Enden der beiden Funkstrecken zu erzielen.

11. Funkkommunikationssystem, das mindestens eine Master-Station beinhaltet, die mit mindestens einer ortsfesten Slave-Station kommunizieren kann, wobei die Master-Station ein Mittel (MSCR) hat, um die relevante Konfiguration und die Betriebsparameter der Slave-Station zu übernehmen und zu speichern, sowie ein Mittel (MSCR), um den Zugriff des Slave zu überwachen und ihm physikalische Ressourcen zuzuweisen, und wobei die Slave-Station Mittel zum Empfangen und/oder Senden mit variabler Leistungsverstärkung (RD-AGC, SGC, REG-PW-TX-AMP) hat, **dadurch gekennzeichnet, dass** dieses System Folgendes beinhaltet:

 • Master-Stationsmittel (MSCR, TXCH-INT) zum Berechnen der Entfernung zwischen der Slave- und der Master-Antenne und Konvertieren dieses Wertes in eine Information, die sich auf besagte Entfernung bezieht;
 • Master-Stationsmittel (MSCR, TXCH-INT, MULTCH, PWA) zum Senden besagter Information an den Slave;
 • Slave-Stationsmittel zum Empfangen besagter Information (RD-AGC, SGC, SSCP); und
 • Slave-Stationsverarbeitungsmittel (SSCP) zum Übersetzen besagter Information in mindestens ein halbstatisches Leistungsverstärkungsregelungssignal (Vdist), das geeignet ist, um es auf besagtes Mittel zum Empfangen und/oder Senden bei variabler Leistungsverstärkung anzuwenden, so dass ein Teil besagter variabler Leistungsverstärkung konfigurierbar gehalten wird, um die durch besagte Entfernung verursachte Freiraumdämpfung der Funkstrecke zu kompensieren.

12. Funkkommunikationssystem nach vorhergehendem Anspruch, **dadurch gekennzeichnet, dass** besagtes Verarbeitungsmittel der Slave-Station (SSCP) ein dynamisches Leistungsverstärkungsregelungssignal (Vref) einstellt, das geeignet ist, um es auf besagtes Mittel zum Empfangen und/oder Senden bei variabler Leistungsverstärkung anzuwenden, so dass zusätzlich unvorhersehbarer Schwund kompensiert wird.

13. Funkkommunikationssystem nach vorhergehendem Anspruch, **dadurch gekennzeichnet, dass** besagtes Mittel zum Empfangen bei variabler Leistungsverstärkung (RD-AGC, SGC) zwei automatische Schwundausgleich-Schaltkreise (AGCs) in Tandemschaltung beinhaltet, wobei ein erster (SGC) für die halbstatische Verstärkung und der zweite (RD-AGC) für die dynamische Verstärkung sorgt, die durch besagte halbstatische Verstärkung reduziert wird.

14. Funkkommunikationssystem nach Anspruch 13, **dadurch gekennzeichnet, dass** der AGC, der für die halbstatische Verstärkung (SGC) sorgt, mit Zwischenfrequenz (ZF) und der AGC, der für die dynamische Verstärkung (RD-AGC) sorgt, mit Hochfrequenz (HF) arbeitet.

15. Funkkommunikationssystem nach Anspruch 13, **dadurch gekennzeichnet, dass** der AGC, der für die halbstatische Verstärkung (SGC) sorgt, mit Hochfrequenz (HF) und der AGC, der für die dynamische Verstärkung (RD-AGC) sorgt, mit Zwischenfrequenz (ZF) arbeitet.

16. Funkkommunikationssystem nach Anspruch 13, **dadurch gekennzeichnet, dass** beide AGCs (RD-AGC; SGC) mit Hochfrequenz arbeiten.

17. Funkkommunikationssystem nach Anspruch 16, **dadurch gekennzeichnet, dass** der AGC, der für die dynamische Verstärkung (RD-AGC) sorgt, längs der Verstärkungskette vor dem AGC positioniert ist, der für die halbstatische Verstärkung (SGC) sorgt.

18. Funkkommunikationssystem nach Anspruch 16, **dadurch gekennzeichnet, dass** der AGC, der für die dynamische Verstärkung (RD-AGC) sorgt, längs der Verstärkungskette hinter dem AGC positioniert ist, der für die halbstatische Verstärkung (SGC) sorgt.

19. Funkkommunikationssystem nach Anspruch 12, **dadurch gekennzeichnet, dass** besagtes Mittel zum Senden bei variabler Leistungsverstärkung (REG-PW-TX-AMP) zwei automatische Schwundausgleich-Schaltkreise (AGCs) in Tandemschaltung beinhaltet, wobei ein erster (VAR-AMP2, 5) für die halbstatische Verstärkung und der zweite (VAR-AMP3, 6) für die dynamische Verstärkung sorgt, die durch besagte halbstatische Verstärkung reduziert wird.

20. Funkkommunikationssystem nach Anspruch 19, **dadurch gekennzeichnet, dass** der AGC, der für die halbstatische Verstärkung (VAR-AMP2, 5) sorgt, mit Zwischenfrequenz (ZF) und der AGC, der für die dynamische Verstärkung (VAR-AMP3, 6) sorgt, mit Hochfrequenz (HF) arbeitet.

21. Funkkommunikationssystem nach Anspruch 19, **dadurch gekennzeichnet, dass** der AGC, der für die halbstatische Verstärkung (VAR-AMP2, 5) sorgt, mit Hochfrequenz (HF) und der AGC, der für die dynamische Verstärkung (VAR-AMP3, 6) sorgt, mit Zwischenfrequenz (ZF) arbeitet.

22. Funkkommunikationssystem nach Anspruch 19, **dadurch gekennzeichnet, dass** beide AGCs (VAR-AMP2, 5, VAR-AMP3, 6) mit Hochfrequenz arbeiten.

23. Funkkommunikationssystem nach Anspruch 22, **dadurch gekennzeichnet, dass** der AGC, der für die halbstatische Verstärkung (VAR-AMP2, 5) sorgt, längs der Verstärkungskette vor dem AGC positioniert ist, der für die dynamische Verstärkung (VAR-AMP3, 6) sorgt.

24. Funkkommunikationssystem nach Anspruch 22, **dadurch gekennzeichnet, dass** der AGC, der für die halbstatische Verstärkung (VAR-AMP2, 5) sorgt, längs der Verstärkungskette hinter dem AGC positioniert ist, der für die dynamische Verstärkung (VAR-AMP3, 6) sorgt.

25. Funkkommunikationssystem nach Anspruch 11 bis 24, **dadurch gekennzeichnet, dass** es eine Mehrzahl von Slave-Stationen beinhaltet, die gleichzeitig per Funk auf verschiedenen Funkkanälen oder in verschiedenen Zeitschlitzen desselben Kanals mit der Master-Station kommunizieren.

26. Funkkommunikationssystem nach den Ansprüchen 11 bis 24, **dadurch gekennzeichnet, dass** es sich um ein System des Typs "Richtfunk" handelt, das kettenförmig angeordnete Repeater-Stationen beinhaltet, die in unterschiedlichen Abständen zueinander angeordnet sind, wobei eine der Stationen die Rolle des Masters und die anderen Stationen die Rolle des Slave übernehmen oder zwei oder mehr Stationen beide Rollen gleichzeitig oder zu unterschiedlichen Zeiten erfüllen.

**Revendications**

1. Procédé de commande d'amplification de puissance destiné à être utilisé dans un système de radiocommunication comprenant au moins une station maître capable de communiquer avec au moins une station esclave fixe, le maître acquérant et enregistrant des paramètres de configuration et de fonctionnement pertinents de l'esclave, surveillant les accès de l'esclave et lui assignant des ressources physiques, l'esclave comprenant un moyen de réception et/ou d'émission à amplification de puissance variable, **caractérisé en ce qu'**il comprend les étapes suivantes :

   • la station maître acquiert une information relative à la distance entre l'antenne de la station esclave et sa propre antenne ;
   • la station maître envoie ladite information à la station esclave ;
   • la station esclave reçoit ladite information et la traduit en au moins un signal de commande d'amplification semi-statique en gardant une fraction de ladite amplification de puissance variable configurable pour compenser l'atténuation d'espace libre du trajet radio due uniquement à ladite distance.

2. Procédé de commande d'amplification de puissance selon la revendication 1, **caractérisé en ce que** la station esclave calcule un signal de commande d'amplification dynamique pour compenser, en plus, l'évanouissement imprévisible.

3. Procédé de commande d'amplification de puissance selon la revendication 1 ou 2, **caractérisé en ce que** ladite information relative à la distance est une mesure de la distance opportunément codée.

4. Procédé de commande d'amplification de puissance selon la revendication 1 ou 2, **caractérisé en ce que** ladite information relative à la distance est une mesure opportunément codée de l'atténuation d'espace libre du trajet radio dépendant de ladite distance.

5. Procédé de commande d'amplification de puissance selon l'une quelconque des revendications précédentes, **caractérisé en ce que** la station maître acquiert ladite information relative à la distance pendant une phase d'installation et l'envoie à l'esclave pendant, ou immédiatement après, une phase d'enregistrement de l'esclave exécutée immédiatement avant le début d'une communication fiable.

6. Procédé de commande d'amplification de puissance selon l'une quelconque des revendications précédentes autres que la revendication 5, **caractérisé en ce que** la station maître acquiert ladite information respective pendant un premier accès de la station esclave et envoie ladite information pendant, ou immédiatement après, une phase d'enregistrement de la station esclave exécutée immédiatement avant le début d'une communication fiable.

7. Procédé de commande d'amplification de puissance selon l'une quelconque des revendications précédentes, **caractérisé en ce que** la station esclave optimise d'autres réglages de réception et/ou émission et paramètres fonctionnels selon l'information pertinente relative à la distance.

8. Procédé de commande d'amplification de puissance selon l'une quelconque des revendications précédentes, **caractérisé en ce que** ledit moyen de réception à amplification de puissance variable peut être utilisé par la station esclave dans une commande de puissance en boucle fermée sur la liaison descendante pour compenser ledit évanouissement imprévisible sur le signal de réception et ledit moyen d'émission à amplification de puissance variable peut être utilisé par la station esclave pour transmettre à la station maître des mesures relatives à la qualité du signal de réception.

9. Procédé de commande d'amplification de puissance selon l'une quelconque des revendications précédentes, **caractérisé en ce que** ledit moyen d'émission à amplification de puissance variable peut être utilisé par la station esclave dans une commande de puissance en boucle fermée sur la liaison montante pour compenser ledit évanouissement imprévisible, sous le contrôle de la station maître qui mesure la qualité du signal de réception.

10. Procédé de commande d'amplification de puissance selon l'une quelconque des revendications précédentes, **caractérisé en ce que** le système est de type relais radio comprenant des stations répétrices en chaîne situées à des distances différentes les unes des autres, une des stations jouant le rôle de maître et les autres stations jouant le rôle des esclaves, ou deux ou plus de deux stations jouant les deux rôles en même temps ou à des moments différents, et un répéteur de secours automatique remplaçant un répéteur en service, soit automatiquement, soit sous l'effet d'une commande envoyée par le maître effectif, le nouveau répéteur connaissant la longueur des sauts sur les deux côtés et utilisant cette connaissance pour optimiser des paramètres internes dépendant du niveau de puissance, tels que les références de tension programmables du circuit AGC, pour obtenir une communication fiable aux extrémités des deux trajets radio.

11. Système de radiocommunication comprenant au moins une station maître capable de communiquer avec au moins une station esclave fixe, le maître possédant un moyen (MSCR) pour acquérir et enregistrer des paramètres de configuration et de fonctionnement pertinents de l'esclave, un moyen (MSCR) pour surveiller l'accès de l'esclave, un moyen (MSCR) pour assigner des ressources physiques à l'esclave et l'esclave possédant un moyen de réception et/ou émission à amplification de puissance variable (RD-AGC, SGC, REG-PW-TX-AMP), **caractérisé en ce qu'**il comprend:

   • un moyen de station maître (MSCR, TXCH-INT) pour calculer la distance entre les antennes de l'esclave et du maître et la convertir en une information relative à ladite distance ;
   • un moyen de station maître (MSCR, TXCH-INT, MULTCH, PWA) pour envoyer ladite information à l'esclave;
   • un moyen de station esclave pour recevoir ladite information (RD-AGC, SGC, SSCP) ; et
   • un moyen de traitement de station esclave (SSCP) pour traduire ladite information en au moins un signal de commande d'amplification de puissance semi-statique (Vdist) adapté pour être appliqué audit moyen de réception et/ou émission à amplification de puissance variable de manière à garder une fraction de ladite amplification de puissance variable configurable pour compenser l'atténuation d'espace libre du trajet radio due à ladite distance.

12. Système de radiocommunication selon la revendication précédente, **caractérisé en ce que** ledit moyen de traitement de station esclave (SSCP) établit un signal de commande d'amplification de puissance dynamique (Vref) adapté pour être appliqué audit moyen de réception et/ou émission à amplification de puissance variable pour compenser, en plus, l'évanouissement imprévisible.

13. Système de radiocommunication selon la revendication précédente, **caractérisé en ce que** ledit moyen de réception à amplification de puissance variable (RD-AGC, SGC) comprend deux circuits de commande de gain automatique ou circuits AGC en tandem, un premier (SGC) à amplification semi-statique et un second (RD-AGC) à amplification dynamique réduite grâce à ladite amplification semi-statique.

**14.** Système de radiocommunication selon la revendication 13, **caractérisé en ce que** le circuit AGC à amplification semi-statique (SGC) fonctionne avec une fréquence intermédiaire et le circuit AGC à amplification dynamique (RD-AGC) fonctionne avec une radiofréquence.

**15.** Système de radiocommunication selon la revendication 13, **caractérisé en ce que** le circuit AGC à amplification semi-statique (SGC) fonctionne avec une radiofréquence et le circuit AGC à amplification dynamique (RD-AGC) fonctionne avec une fréquence intermédiaire.

**16.** Système de radiocommunication selon la revendication 13, **caractérisé en ce que** les deux circuits AGC (RD-AGC ; SGC) fonctionnent avec une radiofréquence.

**17.** Système de radiocommunication selon la revendication 16, **caractérisé en ce que** le circuit AGC à amplification dynamique (RD-AGC) est placé, le long de la chaîne d'amplification, avant le circuit AGC à amplification semi-statique (SGC).

**18.** Système de radiocommunication selon la revendication 16, **caractérisé en ce que** le circuit AGC à amplification dynamique (RD-AGC) est placé, le long de la chaîne d'amplification, après le circuit AGC à amplification semi-statique (SGC).

**19.** Système de radiocommunication selon la revendication 12, **caractérisé en ce que** ledit moyen d'émission à amplification de puissance variable (REG-PW-TX-AMP) comprend deux circuits de commande de gain automatique ou circuits AGC en tandem, un premier (VAR-AMP2, 5) à amplification semi-statique et un second (VAR-AMP3, 6) à amplification dynamique réduite grâce à ladite amplification semi-statique.

**20.** Système de radiocommunication selon la revendication 19, **caractérisé en ce que** le circuit AGC à amplification semi-statique (VAR-AMP2, 5) fonctionne avec une fréquence intermédiaire et le circuit AGC à amplification dynamique (VAR-AMP3, 6) fonctionne avec une radiofréquence.

**21.** Système de radiocommunication selon la revendication 19, **caractérisé en ce que** le circuit AGC à amplification semi-statique (VAR-AMP2, 5) fonctionne avec une radiofréquence et le circuit AGC à amplification dynamique (VAR-AMP3, 6) fonctionne avec une fréquence intermédiaire.

**22.** Système de radiocommunication selon la revendication 19, **caractérisé en ce que** les deux circuits AGC (VAR-AMP2, 5 ; VAR-AMP3, 6) fonctionnent avec une radiofréquence.

**23.** Système de radiocommunication selon la revendication 22, **caractérisé en ce que** le circuit AGC à amplification semi-statique (VAR-AMP2, 5) est placé, le long de la chaîne d'amplification, avant le circuit AGC à amplification dynamique (VAR-AMP3, 6).

**24.** Système de radiocommunication selon la revendication 22, **caractérisé en ce que** le circuit AGC à amplification semi-statique (VAR-AMP2, 5) est placé, le long de la chaîne d'amplification, après le circuit AGC à amplification dynamique (VAR-AMP3, 6).

**25.** Système de radiocommunication selon l'une quelconque des revendications 11 à 24, **caractérisé en ce qu'**il comprend une pluralité de stations esclaves communiquant par radio avec le maître simultanément sur différents canaux radio ou dans des intervalles de temps différents du même canal.

**26.** Système de radiocommunication selon l'une quelconque des revendications 11 à 24, **caractérisé en ce qu'**il est du type relais radio comprenant des stations répétrices en chaîne situées à des distances différentes les unes des autres, une des stations jouant le rôle de maître et les autres stations jouant le rôle des esclaves, ou deux ou plus de deux stations jouant les deux rôles en même temps ou à des moments différents.

# POINT-TO-MULTIPOINT RADIO NETWORK

Local Links

D1

SLAVE STATION

TER

D2

SLAVE STATION

MASTER STATION

Coaxial cable or Fibre optic

D3

to/from PSTN, IP Network, etc.

Local Links

SLAVE STATION

## FIG 1

EP 1 427 117 B1

# POINT-TO-POINT RADIO LINK

**FIG 2**

# MASTER STATION

**FIG 3**

# SLAVE STATION

**FIG 4**

**FIG 5**

SGC

IF

VAR-AMP1

Vdif

2

D/A

3

$V_{DIST}$

**FIG 6**

REG-PW-TX-AMP

VAR-AMP3

VAR-AMP2

Vdif

6

Vdif

5

4

D/A

D/A

$V_{DIST}$

TX-STEP

RF

TX-REG

# Slave stations AGC ranges in point-to-multipoint radio network

Master station

$D_{MIN}$

$D_{MAX}$

"Near" slave station

"Far" slave station

Semistatic gain value for the "near" slave station

Semistatic gain value for the "far" slave station

$G_{MIN}$

$G_{MAX}$

Full (semistatic + dynamic) AGC range

Dynamic AGC range

## FIG 7

EP 1 427 117 B1